# DEMANDE DE BREVET EUROPEEN

(11) **EP 1 887 494 A1**
(43) Date de publication de la demande: **13.02.2008**
(21) Numéro de dépôt: 06291243.1
(22) Date de dépôt: 31.07.2006
(51) Int. Cl.: G06K 19/077

(54) **Dispositif électronique disposant de plusieurs interfaces de communication court-circuitables**

(71) Demandeur: Axalto SA, 92190 Meudon (FR)
(72) Inventeur: Thill, Michel, 92190 Meudon (FR)
(74) Mandataire: Cour, Pierre

(57) **Abrégé**

Des dispositifs électroniques, par exemple de type carte à puce, ont un nombre réduit de contacts électriques pour communiquer à l'aide de différents types d'interfaces de communication. Il est présenté un dispositif portable comportant un circuit intégré 3 et une plage de contact C4, C6 ou C8. Le circuit intégré inclut au moins deux interfaces de communication 33 à 36. Chaque interface dispose d'au moins une borne d'entrée/sortie. La plage de contact est destinée à coopérer avec une borne de contact d'un système interagissant avec le dispositif portable. La plage de contact C4, C6 ou C8 est électriquement reliée à au moins deux bornes d'entrée/sortie correspondant à au moins deux interfaces de communication.

## Description

L'invention se rapporte à un dispositif électronique disposant de plusieurs interfaces de communication cour-circuitables. Plus particulièrement, l'invention se rapporte à des dispositifs électroniques, par exemple de type carte à puce, ayant un nombre réduit de contacts électriques pour communiquer à l'aide de différents types d'interfaces de communication.

Les cartes à puces sont des dispositifs électroniques très largement utilisés à l'heure actuelle dans le domaine de la sécurité électronique. La sécurité électronique s'applique à de nombreuses utilisations et devient de plus en plus courante. A titre d'exemple, la carte à puce intervient dans les transactions bancaires, dans la téléphonie, dans l'accès aux réseaux de données, dans le domaine public (carte d'identité, passeport, carte de santé) et également dans le domaine de l'accès physique à des zones sécurisées.

Le principal atout de la sécurité électronique, notamment à l'aide de carte à puce, est sa fiabilité pour la sécurisation de données qui sont pratiquement inviolable tant que celles-ci ne sortent pas d'une puce électronique sécurisée. Pour pouvoir être utiliser dans des systèmes électroniques plus complexes dont la carte à puce est l'élément sécuritaire, il est nécessaire que cette carte puisse échanger des informations avec l'extérieur. La carte à puce dispose de contacts électriques et/ou d'une antenne couplés avec des interfaces de communication situées dans la puce.

Selon la norme ISO 7816, une carte à puce dispose de 6 ou 8 plages de contacts dont le but est de coopérer avec des bornes de contacts d'un lecteur de carte. Les plages de contact de la carte sont couplées à des interfaces de communication situées dans la puce. La norme ISO 7816 propose une première interface utilisant trois contacts et qui constitue l'interface historique de la carte à puce. Le problème de cette interface est le débit limité à quelques kilobits par seconde. La faible vitesse de cette interface permet d'échanger un faible flux de données. Cela suffit pour certifier une transaction bancaire ou valider un accès mais ne permet pas de décrypter un flux de données en ligne à haut débit.

Pour les flux de données à haut débit, une carte à puce ancienne génération ne peut qu'échanger des clefs avec l'appareil effectuant le déchiffrage des données à haut débit. Or l'appareil effectuant le déchiffrage des données peut être un ordinateur personnel ou un téléphone mobile qui peuvent être assez facilement piraté et les clefs peuvent être volées.

Pour remédier à ce défaut, il est possible d'utiliser d'autres interfaces de communication fonctionnant avec des débits plus élevés sur des plages de contact non utilisées par l'interface de communication ISO 7816, c'est à dire les contacts nommés C4, C6 et C8 dans ladite norme ISO. Un protocole sur un seul fil, tel que par exemple décrit dans EP-A-1 612 985 peut être utilisé sur le contact C6. Il est aussi possible d'avoir recours à une interface fonctionnant selon la norme USB et qui utilise les contacts C4 et C8 comme bus de données. Egalement, il est connu d'utiliser les contacts C4, C6 et C8 avec une interface de type MMC.

Pour fonctionner avec une communication à haut débit, la carte à puce et son lecteur doivent avoir les mêmes interfaces. La coexistence de toutes ces interfaces fait qu'il faut avoir recours à plusieurs type de lecteur pour avoir un accès à haut débit avec tous les types de carte.

L'invention est une solution au problème précité qui permet d'avoir une carte compatible avec plusieurs type de lecteurs qui n'ont pas forcément les mêmes types d'interface.

Plus particulièrement, l'invention est un dispositif portable comportant au moins un circuit intégré, au moins une plage de contact. Le circuit intégré inclut un circuit de traitement et au moins deux interfaces différentes de communication. Chaque interface dispose d'au moins une borne d'entrée et/ou sortie fonctionnant selon un protocole de communication propre à chaque interface afin de permettre au circuit de traitement d'échanger des données avec l'extérieur du circuit intégré. La plage de contact est destinée à coopérer avec une borne de contact d'un système interagissant avec le dispositif portable afin de réaliser un contact électrique entre ladite plage de contact et ladite borne de contact. La plage de contact est électriquement reliée à au moins deux bornes d'entrée et/ou sortie correspondant à au moins deux interfaces de communication différentes.

Selon un mode de réalisation, la plage de contact comporte au moins deux parties conductrices qui sont mises en contact électrique par l'intermédiaire de la borne de contact lorsque ladite borne de contact coopère avec ladite plage de contact. Chacune des parties est électriquement reliée à l'une des interfaces de communication. Chaque partie peut comporter une zone conductrice en forme de dents de peigne, située dans la plage de contact. Les dents de peigne des deux parties sont entrelacées et séparées par un espace isolant. Les dents des peignes et l'espace isolant sont suffisamment fins pour que la borne de contact entre systématiquement en contact avec les deux parties lorsque ladite borne coopère avec ladite plage, indépendamment du point de contact entre ladite borne et ladite plage.

Préférentiellement, au moins l'une des interfaces est munie d'un moyen de détection pour détecter la présence ou l'absence de connexion d'une interface compatible via la borne de contact. Au moins deux interfaces reliées à la même borne de contact peuvent disposer de moyen de détection, lesdits moyens de détection fonctionnant de manière décalée dans le temps.

L'invention sera mieux comprise, et d'autres particularités et avantages apparaîtront à la lecture de la description qui va suivre, la description faisant référence aux dessins annexés, parmi lesquels :
la figure 1 représente un module de carte à puce selon l'invention en vue de dessus,
la figure 2 représente un module selon l'invention en vue de coté,
la figure 3 représente un mode préféré de réalisation d'une plage de contact selon l'invention,
la figure 4 illustre la coopération entre une borne de contact d'un lecteur et la plage de contact de la figure 3,
la figure 5 montre la connexion électrique d'un module,
les figures 6 à 8 montrent différentes configurations de connexion d'une carte à puce selon l'invention avec un lecteur de carte, et
les figures 9 à 12 détaillent la connexion entre carte et lecteur au niveau des interfaces de communication.

Le problème résolu par l'invention existant principalement dans le domaine de la carte à puce, l'exemple de réalisation préféré correspond à une carte à puce. Cependant, le même type de problème peut se poser, par exemple avec des cartes à mémoire de type MMC et/ou SD pour lesquelles on souhaiterait ajouter une deuxième interface, par exemple de type USB sans ajouter de nouvelle plage de contact. En outre, tout dispositif électronique disposant de contacts en nombre réduit peut aussi être concerné par l'invention dès lors que l'on souhaite connecter deux types différents d'interfaces sur un même contact.

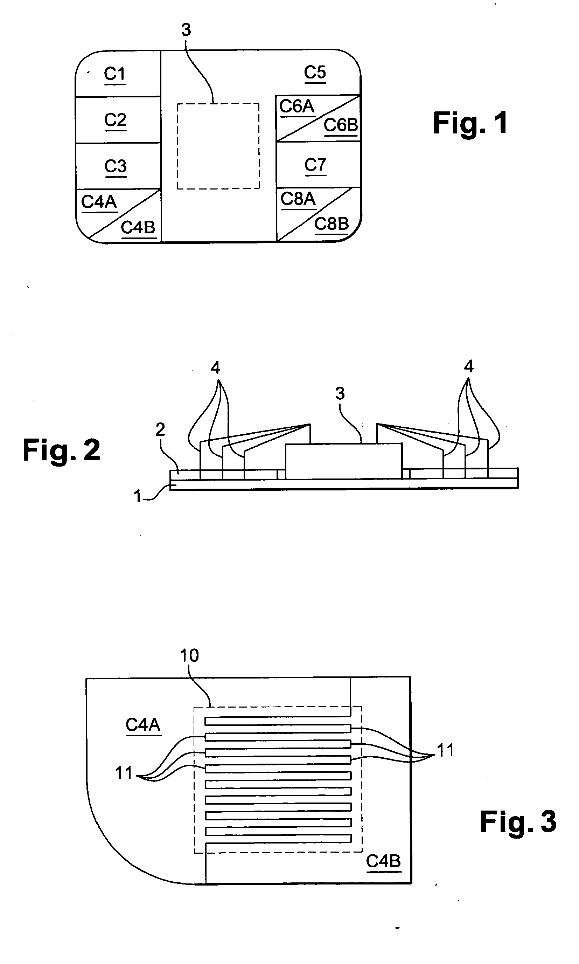

Les figures 1 et 2 représentent un module de carte à puce modifié selon l'invention. Le module comporte une couche métallique 1 ayant une face collée à une couche isolante 2. La couche isolante 2 présente des ouvertures afin de pouvoir coller un circuit intégré 3 directement sur la couche métallique 1 et de pouvoir relier des plots de contact du circuit intégré 3 à des plages de contact C1 à C8 formées sur la couche métallique 1 par l'intermédiaire de fils de liaison 4.

Les plages de contact C1 à C8 sont dessinées et nommées en conformité avec la norme ISO 7816. Cependant, certaines plages sont divisée en deux parties, ainsi les contacts C4, C6 et C8 de la norme ISO 7816 sont divisées en deux parties notées respectivement C4A et C4B, C6A et C6B, et C8A et C8B. La division des plages de contact en deux parties à pour but de connecter une interface de communication sur chaque partie mais en rendant chaque interface accessible pour un lecteur qui ne dispose que d'une unique borne de contact coopérant avec la plage.

A cet effet, la figure 3 montre de manière plus détaillée un mode de réalisation préféré d'une plage de contact divisée en deux parties. A titre d'exemple, il s'agit de la plage de contact C4 divisée en deux parties C4A et C4B, mais l'enseignement de cette figure est aussi applicable aux plages de contact C6 et C8. La norme ISO7816 définie une plage de contact minimale 10 indiquée en pointillée sur la figure 3. Cette plage de contact minimale 10 mesure 1,7 mm de large par 2 mm de long. C'est dans cette plage minimale que doit coopérer une borne de contact d'un lecteur conforme à la norme ISO 7816. Par ailleurs, il est courant d'avoir des plages dont la taille est nettement supérieure à la plage minimale. La division en deux parties de la plage de contact permet d'avoir deux zones de contact séparées pour pouvoir être connectées indépendamment l'une de l'autre à l'aide d'un connecteur non conforme avec la norme ISO.

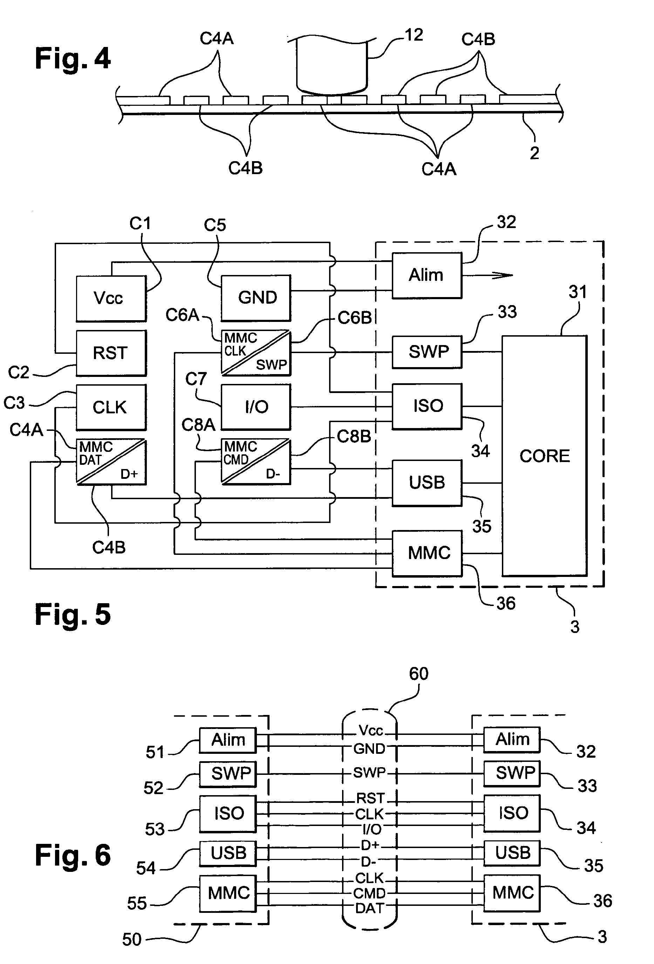

Pour assurer le court-circuit des deux parties à l'aide d'une borne de , contact, les deux parties sont réalisées en forme de peigne dont les dents 11 sont entrelacées. Ainsi, lorsqu'une borne de contact 12 vient en contact avec la plage minimale de contact, ladite borne 12 assure le court-circuit entre les deux parties C4A et C4B. La figure 4 illustre comment se fait le court-circuit. Il est à noter que l'épaisseur de la couche métallique 1 et de la couche isolante 2 sont de l'ordre de la centaine de micromètre et qu'une déformation élastique de ces deux couches permet d'assurer le contact avec les dents 11 de peigne des deux parties dès lors que ces dents 11 sont suffisamment fines.

La figure 5 illustre la connexion électrique du module entre le connecteur et le circuit intégré 3. Le circuit intégré 3 est un circuit pour carte à puce qui comprend un coeur de circuit 31 d'un type conventionnel, c'est à dire incluant un microprocesseur et différents types de mémoires permettant de réaliser différents traitements, tel que largement connu de l'homme du métier. Le circuit intégré 3 comporte un circuit d'alimentation 32, relié aux plages de contact C1 et C5 pour recevoir une alimentation électrique fournie par le lecteur de carte, indépendamment du protocole de communication utilisé. Le circuit d'alimentation 32 distribue ensuite l'alimentation électrique à l'intérieur du circuit intégré 3.

Dans l'exemple préféré, le circuit intégré 3 comporte quatre circuits d'interface de communication 33 à 36 différents. Une première interface 33 est un circuit d'interface mono-filaire, par exemple réalisé comme décrit dans la demande EP-A-1 612 985. Cette première interface comporte un unique fil de communication relié à la plage C6 et plus particulièrement à la partie C6B.

Une deuxième interface 34 est un circuit d'interface conforme à la norme ISO 7816. La deuxième interface 34 dispose de trois fils de communication respectivement reliés aux plages C2, C3 et C7.

Une troisième interface 35 est un circuit d'interface conforme à la norme USB. La troisième interface 35 dispose de deux fils de communication reliés respectivement aux plages C4 et C8 et plus particulièrement aux parties C4B et C8B.

Une quatrième interface 36 est un circuit d'interface conforme à la norme MMC. La quatrième interface 36 dispose de trois fils de communication reliés respectivement aux plages C4, C6 et C8 et plus particulièrement aux parties C4A, C6A et C8A.

Les première à quatrième interfaces 33 à 36 sont en outre reliées au coeur de circuit 31 qui peut les utiliser sélectivement ou éventuellement simultanément pour communiquer avec un lecteur de carte.

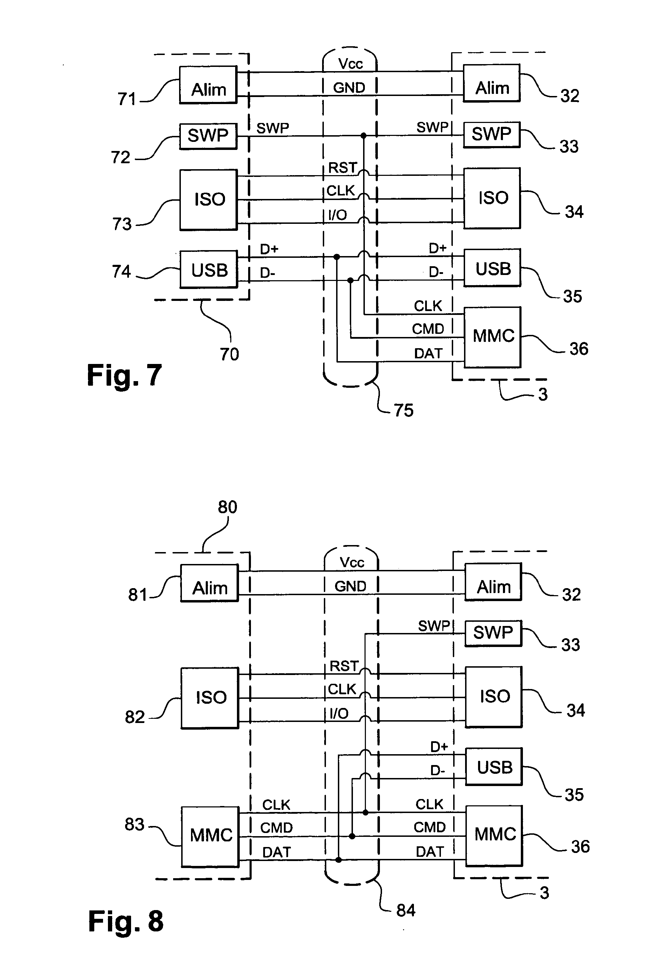

L'invention propose une technique où certaines des interfaces 33 à 36 sont mises en court-circuit, il est possible d'utiliser un connecteur ISO conventionnel et de relier deux interfaces sur une même plage du connecteur ISO. Cependant, l'utilisation de plages en deux parties permet d'avoir un accès indépendant à chaque interface à condition d'avoir un lecteur approprié 50, comme montré sur la figure 7. Le lecteur 50 est un lecteur disposant d'un circuit d'alimentation 51 et de quatre interfaces de communication 52 à 55. En outre le connecteur du lecteur 50 dispose de bornes de contact venant coopérer avec chaque partie de chaque plage de contact en dehors de la zone minimale de contact. Ainsi aucun court-circuit n'est réalisé au niveau des points de contact 60 et chaque interface 33 à 36 de la puce 3 se trouve reliée à une interface correspondante 52 à 55. Un tel lecteur 50 n'est pas approprié pour lire des cartes à puce disposant d'un connecteur ISO conventionnel, mais présente un intérêt pour pouvoir tester les différentes interfaces 33 à 36 de la carte indépendamment les unes des autres.

Les figures 7 et 8 montrent des exemples d'utilisation d'une carte selon l'invention avec un lecteur à connecteur ISO, c'est à dire réalisant les court-circuits entre les deux parties d'une plage. La figure 7 montre un lecteur 70 disposant de huit bornes de contact, d'un circuit d'alimentation 71 et de trois interfaces de communication 72 à 74 qui correspondent respectivement à une interface mono-filaire 72, une interface ISO 73 et une interface USB 74. Pour des raisons de simplification les dispositifs de traitement de la puce 3 et du lecteur 70 ne sont pas représentés, cependant il faut considérer que des dispositifs de traitement sont effectivement connectés aux interfaces de communication 33 à 36 et 72 à 74. La zone de contact entre les bornes du lecteur 70 et les plages de contact de la carte sont illustrées par la zone en pointillées 75.

Sur cette figure 7, on peut voir que l'interface mono-filaire 72 du lecteur 70 est connectée, d'une part, à l'interface mono-filaire 33 de la carte et, d'autre part, à une entrée d'horloge CLK de l'interface MMC 36 de la carte. Egalement, l'interface USB 74 du lecteur 70 est connectée, d'une part, à l'interface USB 35 de la carte et, d'autre part, à deux entrées/sorties CMD et DAT de l'interface MMC 36 de la carte.

La figure 8 montre un lecteur 80 disposant de huit bornes de contact, d'un circuit d'alimentation 81 et de deux interfaces de communication 82 et 83 qui correspondent respectivement à une interface ISO 82 et une interface MMC 83. Pour des raisons de simplification les dispositifs de traitement de la puce 3 et du lecteur 80 ne sont pas représentés, cependant il faut considérer que des dispositifs de traitement sont effectivement connectés aux interfaces de communication 33 à 36, 82 et 83. La zone de contact entre les bornes du lecteur 80 et les plages de contact de la carte sont illustrées par la zone en pointillées 84.

Sur cette figure 8, on peut voir que l'interface MMC 83 du lecteur 80 est connectée, d'une part, à l'interface mono-filaire 33 et à l'interface USB 35 de la carte et, d'autre part, à l'interface MMC 36 de la carte.

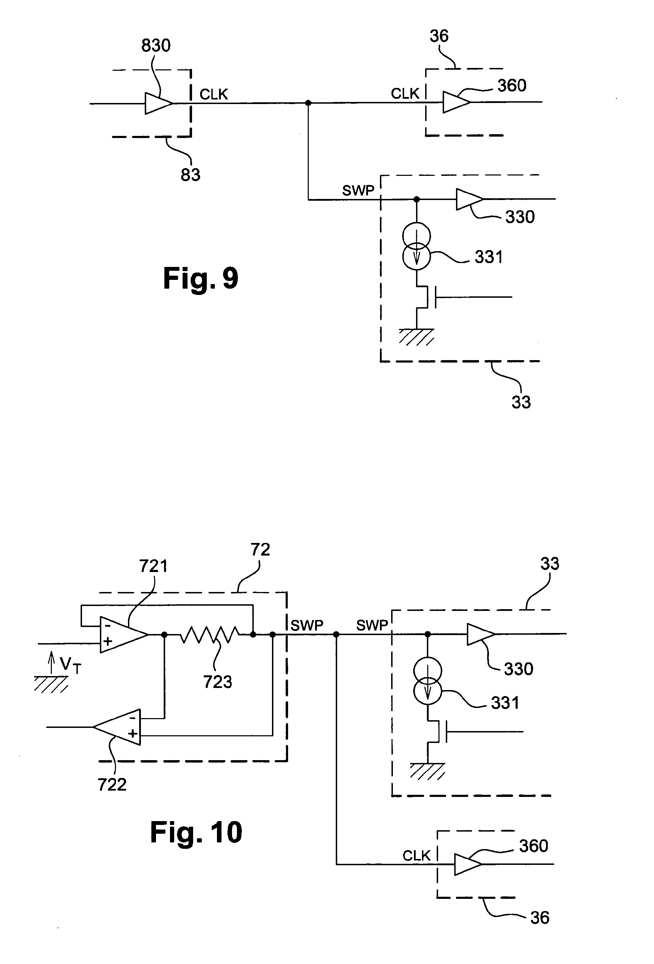

D'autre cas de lecteur utilisant des connecteurs ISO 6 ou 8 contacts avec différentes interfaces de communication sont envisageables. Cependant les cas représentés sur les figures 7 et 8 illustrent bien tous les problèmes que l'on peut rencontrer. Ces problèmes concernent la mise en court-circuit des interfaces 33 et 36 ou des interfaces 35 et 36 de la carte ainsi que la connexion d'une interface 72, 74 ou 83 du lecteur 70 ou 80 à une interface 33, 35 ou 36 de la carte qui ne sont pas prévues pour être connectées ensemble. Les figures 9 à 12 sont utilisées pour montrer comment résoudre ces problèmes.

Les figures 9 et 10 visualisent la connexion en court-circuit faite au niveau du contact C6. Sur la figure 9, la sortie d'horloge CLK de l'interface MMC 83 est connectée à l'entrée d'horloge CLK de l'interface MMC 36 et à l'entrée/sortie de l'interface mono-filaire 33. La sortie d'horloge CLK correspond à la sortie d'un amplificateur de sortie 830, par exemple un étage de type push-pull ou une porte logique, qui fournit un signal cyclique. L'interface MMC 36 comporte au niveau de l'entrée d'horloge un amplificateur d'entrée 360, ou une porte logique, qui reçoit le signal fourni par l'interface MMC 83.

L'interface mono-filaire 33 comporte un amplificateur d'entrée 330 et une source de courant commutée 331. La source de courant 331 permet de moduler le courant pour envoyer un message indépendamment de la tension reçue par l'amplificateur 330. Cependant, l'interface 33 attend de recevoir un message protocolaire prédéfini pour pouvoir y répondre. Suivant la forme du signal cyclique fournit par la sortie CLK, l'interface mono-filaire 33 peut identifier ou ne pas identifier un début de message protocolaire. Si aucun message protocolaire n'est identifié, aucune modulation de courant n'est réalisée. Si un début message protocolaire est identifié alors une modulation de courant est réalisée par la source de courant 331. Cette modulation de courant est relativement faible et ne perturbe pas l'amplificateur de sortie 830.

En outre, pour qu'une communication mono-filaire soit établie, il est nécessaire d'échanger plusieurs messages protocolaires. Même si le signal fourni par la sortie d'horloge ressemble à un début de message protocolaire, celui-ci sera considéré comme un message erroné au bout de quelques cycles. Lorsque le message est erroné, l'interface mono-filaire 33 envoie au coeur de circuit 31 un message indiquant qu'une tentative de connexion a échoué. Le coeur de circuit 31 peut alors indiquer à l'interface mono-filaire 33 de se mettre hors circuit. De manière optionnelle, la mise hors circuit peut se faire après deux ou trois tentatives de connexion erronée. Une fois l'interface mono-filaire 33 hors circuit, il n'y a plus de tentative de communication et la carte fonctionne comme s'il n'y avait pas d'interface mono-filaire.

Sur la figure 10, la sortie SWP de l'interface mono-filaire 72 est connectée à l'entrée d'horloge CLK de l'interface MMC 36 et à l'entrée/sortie de l'interface mono-filaire 33. L'interface mono-filaire 72 comporte un amplificateur de sortie 721, un amplificateur d'entrée 722 et une résistance 723. Les amplificateurs de sortie 721 et d'entrée 722 sont des amplificateurs différentiels. L'amplificateur de sortie 721 est couplé en montage dit « suiveur » avec la résistance 723 insérée entre la sortie de l'amplificateur de sortie 721 et une entrée de contre réaction. La sortie SWP de l'interface mono-filaire 72 correspond au noeud entre la résistance et l'entrée de contre réaction de sorte que la tension de sortie est asservie sur la tension de commande V_{T} qui correspond au signal modulé en tension à envoyer. Les entrées différentielles de l'amplificateur d'entrée 722 sont connectées aux bornes de la résistance 723 de sorte que le courant traversant la résistance 723 est fortement amplifié et transformé en tension représentative d'un signal reçu. Pour plus de renseignement sur le fonctionnement de cette interface, l'homme du métier peut se reporter à la demande EP-A-1 612 985.

L'interface MMC 36 et l'interface mono-filaire 33 sont les mêmes que précédemment. Lorsque l'interface mono-filaire 72 initie une communication pour vérifier la présence d'une interface mono-filaire 33, un début de message est envoyé par modulation en tension. L'interface mono-filaire 33 répond à ce message par modulation de courant et l'interface 33 peut indiquer qu'une interface maître a été détectée.

L'interface MMC 36 reçoit également le signal modulé en tension et le traduit en signal d'horloge. Cela n'est pas gênant pour l'interface MMC tant que le signal d'horloge ainsi récupéré n'est pas utilisé pour envoyer ou recevoir des données sur les deux autres fils de ladite interface.

Au vu de ce qui précède, l'homme du métier comprendra que le fait de court-circuiter les interfaces MMC 33 et mono-filaire 36 n'occasionne aucun problème particulier.

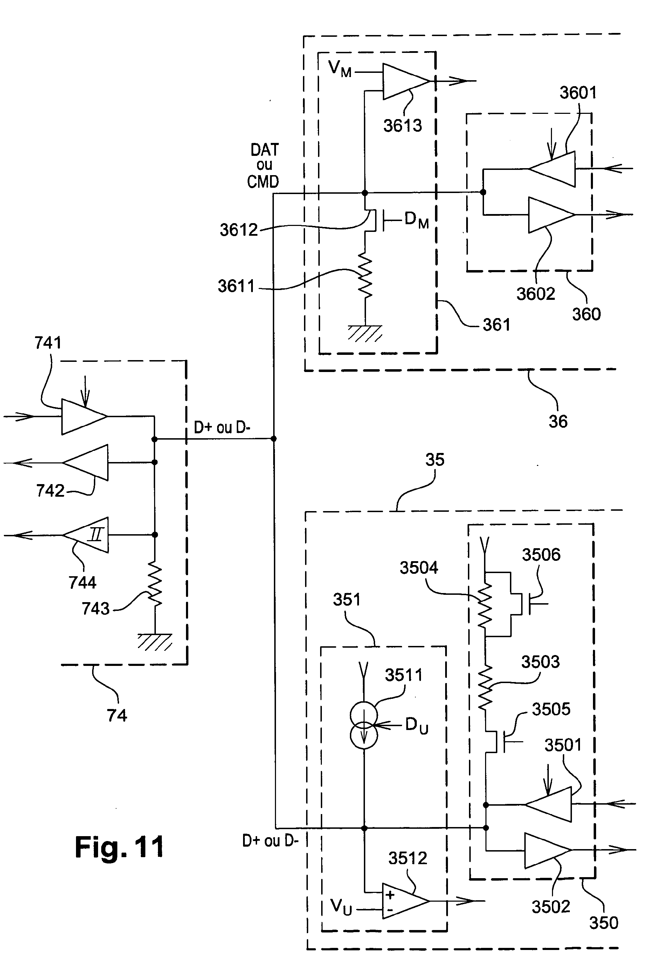

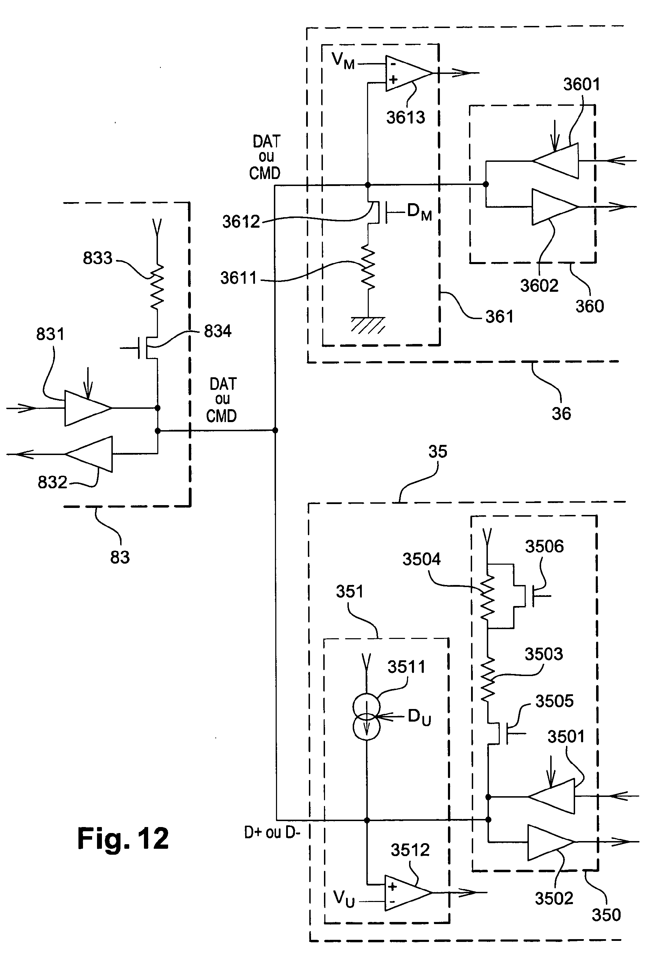

Les figures 11 et 12 s'intéressent aux deux autres fils d'interface liés au protocole MMC et aux fils dédiés au protocole USB. Il est à noter au préalable que les entrées/sorties sont identiques pour les deux fils de communication D+ et D- du protocole USB. Egalement, les entrées/sorties correspondant aux fils de commande CMD et de donnée DAT du protocole MMC sont identiques. En raison de ces identités au niveau des interfaces un seul fil est représenté avec les appellations correspondant aux deux fils.

La figure 11 représente la connexion d'une entrée/sortie D+ ou D- de l'interface USB 74 à, d'une part, une entrée/sortie D+ ou D- de l'interface USB 35 et, d'autre part, une entrée/sortie DAT ou CMD de l'interface MMC 36. L'interface USB 74 est une interface USB conventionnelle qui comporte une porte de sortie 741, une porte d'entrée 742, une résistance de tirage à zéro 743 et une porte de détection d'attachement 744. La porte de sortie 741 est une porte à sortie trois état dont la sortie correspond à l'entrée/sortie D+. L'entrée de la porte d'entrée 742 est reliée à l'entrée/sortie D+. La résistance 743 relie l'entrée/sortie D+ à la masse. L'entrée de la porte de détection 744 est aussi reliée à l'entrée/sortie D+. La résistance de tirage 743 est définie dans la norme et elle coopère avec la porte de détection pour détecter la présence d'une autre interface USB. Ce n'est qu'en cas de détection d'une interface USB que des données sont envoyées par la porte de sortie 741. Sans détection d'autre interface USB, la porte de sortie 741 reste à un niveau indéterminé, tout état logique qui arrive sur la porte d'entrée 742 est ignoré.

La figure 12 représente la connexion d'une entrée/sortie DAT ou CMD de l'interface MMC 83 à, d'une part, une entrée/sortie D+ ou D- de l'interface USB 35 et, d'autre part, une entrée/sortie DAT ou CMD de l'interface MMC 36. L'interface MMC 83 est une interface MMC conforme à la norme MMC, cette interface 83 comporte une porte de sortie 831, une porte d'entrée 832 une résistance de tirage haut 833 et un transistor de connexion 834.

La porte de sortie 831 est une porte à sortie trois état dont la sortie correspond à l'entrée/sortie DAT. L'entrée de la porte d'entrée 832 est reliée à l'entrée/sortie DAT. La résistance 833 est relié, d'une part, à la tension d'alimentation et, d'autre part, à l'entrée/sortie DAT par l'intermédiaire du canal du transistor 834. La résistance de tirage 833 sert à polariser les fils de liaison pour pouvoir supporter des interfaces à collecteur ouvert. Dans le cas où une interface se signale lors d'une transaction d'initialisation comme n'ayant pas de collecteur ouvert, ce qui est généralement le cas pour les interfaces fonctionnant à plus de 10 MHz, la résistance de tirage 833 est déconnectée de la sortie par commutation du transistor 834

Les figures 11 et 12 montrent aussi la constitution des interfaces USB 35 et MMC 36 modifiées selon l'invention. L'interface USB 35 comporte un étage de sortie 350 et un étage de détection 351. L'étage de sortie 350 est défini par la norme USB, il comporte une porte de sortie 3501, une porte d'entrée 3502, deux résistances de tirage haut 3503 et 3504, et deux transistors de commutation 3505 et 3506.

La porte de sortie 3501 est une porte à sortie trois état dont la sortie correspond à l'entrée/sortie D+. L'entrée de la porte d'entrée 3502 est reliée à l'entrée/sortie D+. Les résistances 3503 et 3504 sont reliés en série entre, d'une part, à la tension d'alimentation et, d'autre part, à l'entrée/sortie D+ par l'intermédiaire du canal du transistor 3505. Le transistor 3506 sert à court-circuiter la résistance 3504. Selon la norme USB, une interface doit se signaler par l'ajout d'une résistance de tirage haut qui est la résistance 3503. Une fois que la connexion est établie, il est possible d'augmenter cette résistance en ajoutant en série la résistance 3504. Les valeurs de ces résistances sont définies dans la norme USB. Le transistor 3505 connecte cette résistance un peu après la stabilisation de l'alimentation de l'interface afin d'éviter des problèmes liés à d'éventuel rebond. La résistance 3504 sert à réduire la consommation de polarisation une fois que la communication est établie.

Selon l'invention, il est d'abord réalisé une détection de présence d'interface USB coté lecteur, c'est à dire la présence de l'interface USB 74 avant de connecter la résistance 3503 à l'entrée/sortie D+. La détection de présence est réalisée par l'étage de détection 351 placé en parallèle sur l'entrée/sortie D+. L'étage de détection 351 comporte une source de courant 3511 et un comparateur à seuil 3512, les deux étant connectés sur l'entrée/sortie D+. La source de courant lorsqu'elle est activée, injecte un courant à destination de la ligne connectée à l'entrée/sortie D+. Le comparateur à seuil compare la tension obtenue à l'aide de l'injection de courant à une tension de référence Vu qui correspond à une tension maximale aux bornes de la résistance 743 si une interface USB 74 est effectivement connectée. L'utilisation d'un courant permet de différentier la présence d'une résistance de tirage à zéro d'une résistance de plus forte impédance qui peut être ajouter en absence d'interface sur un connecteur pour mettre à la masse des contacts inutilisés. Si aucune interface ou une interface MMC 83 est placée de l'autre côté de la ligne, la tension sur l'entrée/sortie D+ sera également supérieure à la tension de seuil Vu et il n'y aura pas de détection d'interface USB. Si la tension correspond à l'interface USB 74, alors il est possible de connecter la résistance 3505 et d'initier une connexion selon la norme USB.

L'interface MMC 36 comporte un étage de sortie 360 et un étage de détection 361. L'étage de sortie 360 est défini par la norme MMC, il comporte une porte de sortie 3601 et une porte d'entrée 3602. La porte de sortie 3601 est une porte à sortie trois état dont la sortie correspond à l'entrée/sortie DAT. L'entrée de la porte d'entrée 3602 est reliée à l'entrée/sortie DAT. Selon la norme MMC, la carte doit se signaler au lecteur si elle reçoit un signal d'horloge sur l'entrée d'horloge CLK de l'interface 36. Cependant il est possible que le signal reçu ne soit pas un signal d'horloge et donc, selon l'invention, il est réalisé une détection de présence d'interface avant de signaler la présence de l'interface MMC 36.

La détection de présence est réalisée par l'étage de détection 361 placé en parallèle sur l'entrée/sortie DAT. L'étage de détection 361 comporte une résistance 3611, un transistor 3612 et un comparateur à seuil 3613. Pendant une étape de détection, le transistor 3612 est rendu passant pour connecter la résistance 3611 entre la masse et l'entrée/sortie DAT. Le comparateur 3613 compare la tension présente sur l'entrée/sortie DAT avec une tension de référence V_{M}. La tension VM est déterminée comme étant une tension minimale obtenue lorsque la résistance 883 de l'interface MMC 83 est connectée à l'entrée/sortie DAT, indépendamment des tolérances des résistances 883 et 36. Si la tension sur l'entrée/sortie DAT est supérieure à la tension VM pendant l'étape de détection alors l'interface MMC 83 est détectée et il est possible à l'interface MMC 36 de se signaler en réponse au signal d'horloge reçu sur l'entrée CLK de cette interface MMC 36.

Si rien n'est connecté à l'entrée/sortie DAT coté lecteur, ou si une résistance de mise à la masse est connectée, alors la tension sur l'entrée/sortie DAT est égale à la tension de masse et donc inférieur à la tension de référence V_{M}. Dans ces conditions, l'interface MMC 36 détecte qu'elle n'est pas connectée à un lecteur muni d'une interface MMC et ne se signale pas même si un signal est reçu sur l'entrée CLK.

L'homme du métier remarquera que le test de présence sur l'interface MMC 36 et sur l'interface USB 35 ne doivent pas être réalisé en même temps car cela fausserait la détection. Il convient de faire fonctionner les circuits de détection 351 et 361 de manière décalée dans le temps afin d'éviter ce problème. Bien entendu, d'autres possibilités de détection sont envisageables. A titre d'exemple il est possible d'effectuer simplement une mesure d'impédance et d'aller chercher dans une table de correspondance quelle interface peut avoir une impédance correspondant à l'impédance mesurée.

L'exemple de réalisation décrit n'est qu'un exemple préféré et non limitatif. D'autres variantes sont possibles. Notamment, l'exemple décrit montre une carte disposant de quatre interfaces de communication. Il est possible d'avoir un nombre plus réduit d'interfaces, le problème résolu par l'invention se posant dès lors que l'on dispose de deux interfaces utilisant une même plage de contact.

Egalement, les interfaces de communication ne sont pas non-plus limitées au type d'interface décrite dans la présente description. A titre d'exemple, les analogies existant entre le standard MMC et le standard SD, par exemple, font que ce qui est montré pour le standard MMC s'applique également au standard SD. Ainsi, l'interface MMC peut être remplacée par une interface SD en utilisant les circuits détection du même type que pour une interface MMC. D'autres types d'interface ayant des analogies avec l'un des standards SWP, MMC ou USB peuvent également se substituer à l'une des interfaces montrées.

## Revendications

1. Dispositif portable comportant :
- au moins un circuit intégré (3) incluant un circuit de traitement (31) et au moins deux interfaces de communication (33 à 36) différentes, chaque interface (33 à 36) disposant d'au moins une borne d'entrée et/ou sortie fonctionnant selon un protocole de communication propre à chaque interface afin de permettre au circuit de traitement d'échanger des données avec l'extérieur du circuit intégré,
- au moins une plage de contact (C4, C6, C8) destinée à coopérer avec une borne de contact (12) d'un système interagissant avec le dispositif portable afin de réaliser un contact électrique entre ladite plage de contact et ladite borne de contact,
**caractérisé en ce** la plage de contact (C4, C6, C8) est électriquement reliée à au moins deux bornes d'entrée et/ou sortie (SWP, D+, D-, CLK, CMD, DAT) correspondant à au moins deux interfaces de communication (33, 35, 36) différentes.

2. Dispositif selon la revendication 1, dans lequel la plage de contact (C4, C6, C8) comporte au moins deux parties conductrices (C4A, C4A, C6A, C6B, C8A, C8B) qui sont mises en contact électrique par l'intermédiaire de la borne de contact (12) lorsque ladite borne de contact coopère avec ladite plage de contact, chacune des parties étant électriquement reliée à l'une des interfaces de communication.

3. Dispositif selon la revendication 2, dans lequel chaque partie (C4A, C4A, C6A, C6B, C8A, C8B) comporte une zone conductrice en forme de dents (11) de peigne, située dans la plage de contact, les dents de peigne des deux parties (C4A, C4A, C6A, C6B, C8A, C8B) étant entrelacées et séparées par un espace isolant, les dents des peignes et l'espace isolant étant suffisamment fins pour que la borne de contact (12) entre systématiquement en contact avec les deux parties lorsque ladite borne coopère avec ladite plage, indépendamment du point de contact entre ladite borne et ladite plage.

4. Dispositif selon l'une des revendications précédentes, dans lequel au moins l'une des interfaces (35, 36) est munie d'un moyen de détection (351, 361) pour détecter la présence ou l'absence de connexion d'une interface compatible via la borne de contact.

5. Dispositif selon la revendication 4, dans lequel au moins deux interfaces (35, 36) reliées à la même borne de contact (C4, C8) disposent de moyen de détection (351, 361), lesdits moyens de détection (351, 361) fonctionnant de manière décalée dans le temps.

6. Dispositif selon l'une des revendications 1 à 5, dans lequel l'une des interfaces est une interface (33) supportant un protocole de communication mono-filaire, et une autre des interfaces est une interface (36) de type MMC ou SD.

7. Dispositif selon l'une des revendications 1 à 5, dans lequel l'une des interfaces est une interface USB (35) et l'autre des interfaces est une interface (36) de type MMC ou SD.

8. Dispositif selon l'une des revendications précédentes, dans lequel le dispositif est une carte à puce conforme au standard ISO 7816 qui dispose d'un connecteur disposant de 6 ou 8 contacts nommés C1 à C8 tel que définis dans ledit standard, et dans lequel la plage de contact correspond à un ou plusieurs des contacts suivant : C4, C6 ou C8.
